(19) Europäisches Patentamt
European Patent Office
Office européen des brevets

(11) **EP 2 177 404 A1**

(12) **EUROPÄISCHE PATENTANMELDUNG**

(43) Veröffentlichungstag:
   **21.04.2010 Patentblatt 2010/16**

(51) Int Cl.:
   ***B60S 1/34*** *(2006.01)*

(21) Anmeldenummer: 08105566.7

(22) Anmeldetag: **14.10.2008**

(84) Benannte Vertragsstaaten:
   **AT BE BG CH CY CZ DE DK EE ES FI FR GB GR
   HR HU IE IS IT LI LT LU LV MC MT NL NO PL PT
   RO SE SI SK TR**
   Benannte Erstreckungsstaaten:
   **AL BA MK RS**

(71) Anmelder: **ROBERT BOSCH GMBH
   70442 Stuttgart (DE)**

(72) Erfinder:
   • **Gilcher, Marc
     77815 Buehl-Altschweier (DE)**

   • **Huerst, Ingo
     76135 Karlsruhe (DE)**
   • **Weiler, Michael
     77833 Ottersweier (DE)**
   • **Leutsch, Rainer
     77830 Buehlertal (DE)**
   • **Kruse, Michael
     77815 Buehl (DE)**
   • **Pott, Wolfgang
     77855 Achern (DE)**

(54) **Scheibenwischerarm**

(57)   Ein Scheibenwischerarm weist ein mit einer Wischerwelle zu verbindendes Befestigungsteil (6) und ein Tragteil (7) auf, welches Träger eines Wischblattes (5) ist, wobei das Tragteil (7) über ein Verbindungselement (8) über das Befestigungsteil (6) beweglich gekoppelt ist.

Des Weiteren ist ein zwischen Befestigungsteil (6) und Tragteil (7) wirkendes und das Tragteil (7) in Richtung der Scheibe (2) beaufschlagendes Federelement (10) vorgesehen, dessen Wirklinie im Wesentlichen parallel zur Auflagekraft des Wischblatts (5) gerichtet ist.

# Fig. 2

EP 2 177 404 A1

**Beschreibung**

Die Erfindung bezieht sich auf einen Scheibenwischerarm, insbesondere für ein Kraftfahrzeug, nach dem Oberbegriff des Anspruches 1.

Stand der Technik

Wischerarme in Scheibenwischeinrichtungen sind an einer pendelnden Wischerwelle befestigt und tragen an ihrem freien Ende ein Wischblatt, das auf der zu reinigenden Scheibe aufliegt. Damit das Wischblatt mit einer definierten Kraft gegen die Scheibe gepresst wird, um einen sauberen Abtrag des Wassers auf der Scheibe sicherzustellen, wird der Wischerarm und damit auch das Wischerblatt bezogen auf die Wischerwelle von der Kraft eines Federelementes beaufschlagt.

Ein derartiger Gegenstand wird beispielsweise in der US 2,289,552 beschrieben. Der Wischerarm ist zweiteilig aufgebaut und umfasst ein Befestigungsteil, welches mit der Wischerwelle verbunden ist, sowie ein Tragteil, welches Träger des Wischblattes ist, wobei das Befestigungsteil und das Tragteil gelenkig miteinander verbunden sind. Zwischen Befestigungsteil und Tragteil wirkt eine Blattfeder, die das Tragteil um die Achse des verbindenden Gelenks in Richtung auf die zu reinigende Scheibe kraftbeaufschlagt. Die Blattfeder stützt sich auf der dem Befestigungsteil zugewandten Seite an einer Hülse ab, die als Bestandteil des Verbindungsgelenks fest mit dem Befestigungsteil verbunden ist. Dadurch entstehen verhältnismäßig hohe Kräfte im Gelenk, die insbesondere bei einer Ausführung der Bauteile aus Kunststoff zu einer Deformation durch Kriechen führen können. Bei höheren Temperaturen kann sich dieses Problem noch verstärken.

Offenbarung der Erfindung

Der Erfindung liegt die Aufgabe zu Grunde, mit einfachen konstruktiven Maßnahmen einen Scheibenwischerarm zu schaffen, bei dem die Lagerkräfte zwischen Bauteilen des Wischerarmes reduziert und zugleich sichergestellt ist, dass der Wischerarm gegen die zu reinigende Scheibe gedrückt wird.

Diese Aufgabe wird erfindungsgemäß mit den Merkmalen des Anspruches 1 gelöst. Die Unteransprüche geben zweckmäßige Weiterbildungen an.

Der erfindungsgemäße Scheibenwischerarm, der insbesondere in Kraftfahrzeugen Verwendung findet, ist Bestandteil einer Scheibenwischeinrichtung, welche zur Reinigung einer Scheibe dient. Der Scheibenwischerarm umfasst ein mit einer Wischerwelle zu verbindendes Befestigungsteil sowie ein Tragteil, welches Träger des Wischblattes ist, das auf der zu reinigenden Scheibe aufliegt. Das Tragteil ist über ein Verbindungselement beweglich mit dem Befestigungsteil gekoppelt. Des Weiteren ist ein zwischen Befestigungsteil und Tragteil wirkendes und das Tragteil in Richtung auf die Scheibe beaufschlagendes Federelement vorgesehen, dessen Wirklinie im Wesentlichen parallel zur Auflagekraft des Wischblattes auf die Scheibe gerichtet ist.

Diese Ausführung hat den Vorteil, dass ohne Vergrößerung des Bauraumes des Wischerarmes ein größerer Hebel zur Erzeugung der Auflagekraft realisiert werden kann. Zugleich werden die Lagerkräfte gegenüber Ausführungen aus dem Stand der Technik erheblich reduziert, was sich positiv auf den Verschleiß, insbesondere das Kriechverhalten des Werkstoffes auswirkt. Die Reduzierung der Lagerkräfte kommt im Wesentlichen dadurch zustande, dass von dem Lager, welches von dem Verbindungselement zwischen Tragteil und Befestigungsteil gebildet ist, lediglich Reaktionskräfte als Summe der Federkraft und der Auflagekraft aufgenommen werden müssen. Die Wirklinie des Federelementes in der im Wesentlichen gleichen Wirkrichtung wie die Auflagekraft ermöglicht die Ausnutzung einer Hebelwirkung mit einer Kraftverstärkung durch die als Hebel wirkenden Abschnitte zwischen dem Federelement und dem Verbindungselement einerseits sowie dem Verbindungselement und der Aufnahme des Wischerblattes andererseits. Durch einen entsprechend groß gewählten Abstand zwischen der Wirklinie des Federelementes und dem Verbindungselement kann eine große Hebelverstärkung erzielt werden, was den Einsatz kleiner dimensionierter Federelemente zum Einstellen einer definierten Auflagekraft erlaubt.

In bevorzugter Ausführung ist das das Wischblatt aufnehmende Tragteil länglich ausgebildet, wobei die Wirklinie des Federelements im Wesentlichen senkrecht zur Längserstreckung, also zur Längsachse des Tragteils gerichtet ist. Dies entspricht der üblichen Ausführung eines Scheibenwischerarmes, bei der der Wischerarm die Distanz zwischen der eine Pendelbewegung ausführenden, antreibenden Wischerwelle und dem Wischblatt überbrückt, wobei das Tragteil und das Wischblatt üblicherweise parallel zueinander liegen.

Gemäß einer vorteilhaften Ausführung ist das Verbindungselement, über das das Tragteil am Befestigungsteil angekoppelt ist, als einfaches Drehgelenk ausgeführt, welches genau einen rotatorischen Freiheitsgrad besitzt, dessen Drehachse zweckmäßigerweise zumindest annähernd parallel zu der zu reinigenden Scheibe liegt, so dass bei einer Relativschwenkbewegung zwischen Befestigungsteil und Tragteil letzteres in Richtung auf die Scheibe bzw. weg von dieser verschwenkt wird. Über die Kraftbeaufschlagung mithilfe des Federelementes wird das Tragteil um die Achse des Drehgelenkes in Richtung auf die Scheibe kraftbeaufschlagt, woraufhin sich die gewünschte Auflagekraft des Wischblattes auf der Scheibe einstellt.

Gemäß einer weiteren vorteilhaften Ausführung ist das Drehgelenk als zapfenloses Gelenk ausgebildet und weist ineinandergreifende, einstückig ausgebildete Gelenkteile sowohl am Befestigungsteil als auch am Tragteil auf. Diese Gelenkteile, bei denen es sich beispielsweise um Stege oder Balken oder um Pins handelt, welche mit den jeweiligen Gelenkabschnitten verbunden sind, greifen in montierter Position ineinander, so dass eine in der Regel formschlüssige Verbindung realisiert ist, die zugleich aber den gewünschten rotatorischen Freiheitsgrad ermöglicht.

Grundsätzlich kommen als Verbindungselement aber auch sonstige Ausführungen in Betracht, beispielsweise Gelenke mit mehr als einem Freiheitsgrad wie z.B. einem rotatorischen und einem translatorischen Freiheitsgrad oder auch Verbindungsanordnungen, die ausschließlich eine translatorische Relativbewegung zwischen Befestigungsteil und Tragteil ermöglichen. Wesentlich ist hierbei, dass das Verbindungselement eine rotatorische und/oder translatorische Relativbewegung zwischen Gelenkteil und Tragteil ermöglicht und dass das Federelement seine Federwirkung in der Weise entfaltet, dass das Tragteil seinem Bewegungsfreiheitsgrad folgend in Richtung auf die Scheibe gepresst wird.

Als Federelement kommen verschiedene Ausführungen in Betracht. Gemäß einer ersten, einfach ausgebildeten Ausführung ist das Federelement als Schraubenfeder, insbesondere als Schraubendruckfeder ausgebildet, die in der Ausführung des Verbindungselementes als Drehgelenk auf Abstand zur Drehachse positioniert ist und eine Druckkraft zwischen dem Befestigungs- und Tragteil ausübt. Der Abstand zwischen der Schraubenfeder und der Drehachse wirkt als Hebel, wobei über das Verhältnis der Hebellängen die Kraftübertragung an der Position der Anbindung des Wischblatts an das Tragteil eingestellt werden kann.

Es kann zweckmäßig sein, die Schraubenfeder zumindest an einem Ende, vorteilhafterweise aber an beiden Enden in jeweils eine Bohrung einzusetzen, die beispielsweise als Sacklochbohrung ausgeführt und in das Befestigungsteil bzw. in das Tragteil eingebracht ist.

Gemäß einer weiteren zweckmäßigen Ausführung ist das Federelement, insbesondere in seiner Ausbildung als Schraubendruckfeder, als Polymerfeder ausgeführt. Da über die Wahl der Hebellängen eine Verstärkung der Federkraft erzielt werden kann und somit kleinere Federelemente einsetzbar sind, reicht die Ausführung als Polymerfeder grundsätzlich für die Erzielung einer gewünschten Auflagekraft zwischen Wischblatt und Scheibe aus.

Gemäß einer alternativen Ausführung ist das Federelement als Spiralfeder oder als Schenkelfeder ausgebildet, wobei die Schenkel der Feder jeweils dem Befestigungsteil und dem Tragteil zugeordnet sind und diese mit einer auseinanderdrückenden bzw. zusammenziehenden Federkraft beaufschlagen. Vorteilhafterweise ist die Spiral- bzw. Schenkelfeder um die Achse des Drehgelenks gelegt, was eine Raum sparende Anordnung ermöglicht.

Die geringere Federkraft, welche zur Einstellung einer gewünschten Auflagekraft erforderlich ist, und die daraus resultierenden geringeren Lagerkräfte ermöglichen eine Ausführung der Teile des Scheibenwischerarms aus Kunststoff, insbesondere als Druckguss-Kunststoffteile. Grundsätzlich ist aber auch eine Ausführung aus Metall bzw. als Blechteile möglich.

Weitere Vorteile und zweckmäßige Ausführungen sind den weiteren Ansprüchen, der Figurenbeschreibung und den Zeichnungen zu entnehmen. Es zeigen:

Fig. 1      eine schematische Darstellung einer Scheibenwischvorrichtung für ein Kraftfahrzeug,

Fig. 2      eine Darstellung des Scheibenwischerarms, bestehend aus einem Befestigungsteil, welches mit einer Wischerwelle zu verbinden ist, und einem Tragteil, das über ein Drehgelenk drehbar mit dem Befestigungsteil verbunden ist, und mit einem Federelement zwischen Befestigungsteil und Tragteil, einschließlich einer Darstellung der auf den Scheibenwischerarm wirkenden Kräfte,

Fig. 3      der Scheibenwischerarm gemäß Fig. 2 in einer in Richtung auf die Scheibe ausgelenkten Lage des Tragarmes,

Fig. 4      der Scheibenwischerarm in einer in Gegenrichtung ausgelenkten Lage,

Fig. 5      das zwischen Befestigungsteil und Tragteil angeordnete Federelement, welches als Schraubenfeder ausgebildet ist und in Sacklochbohrungen in den Wischerteilen aufgenommen ist, dargestellt in nicht ausgelenkter Lage (oberes Bild) und ausgelenkter Lage (unteres Bild),

Fig. 6      eine Ausführungsvariante des Federelementes zwischen Befestigungs- und Tragteil, bei der die Enden des Federelementes in gelenkig mit dem jeweiligen Bauteil verbundenen Aufnahmegliedern aufgenommen sind, dargestellt im ausgelenkten Zustand (linkes Bild) und im Ausgangszustand (rechts Bild),

Fig. 7      der Scheibenwischerarm in einer Ausführungsvariante, bei der das Federelement als Polymerfeder ausgebildet ist,

Fig. 8      der Scheibenwischerarm in einer weiteren Ausführungsvariante, bei der das Federelement als Schenkelfeder ausgebildet ist,

Fig. 9 bis 12    verschiedene Ausführungsvarianten des als Gelenk ausgebildeten Verbindungselementes zwischen Befestigungsteil und Tragteil,

Fig. 13a      ein mehrgliedrig ausgebildetes Drehgelenk, welches als Verbindungselement zwischen Befestigungsteil und Tragteil eingesetzt wird, dargestellt während der Montage,

Fig. 13b      das mehrgliedrige Drehgelenk im fertig montierten Zustand,

Fig. 14      einen Schnitt durch den Scheibenwischerarm durch das Befestigungsteil und das Tragteil in einer ersten Ausführung,

Fig. 15      ein Fig. 14 entsprechender Schnitt, jedoch in einer zweiten Ausführung von Befestigungsteil und Tragteil.

In den Figuren sind gleiche Bauteile mit gleichen Bezugszeichen versehen.

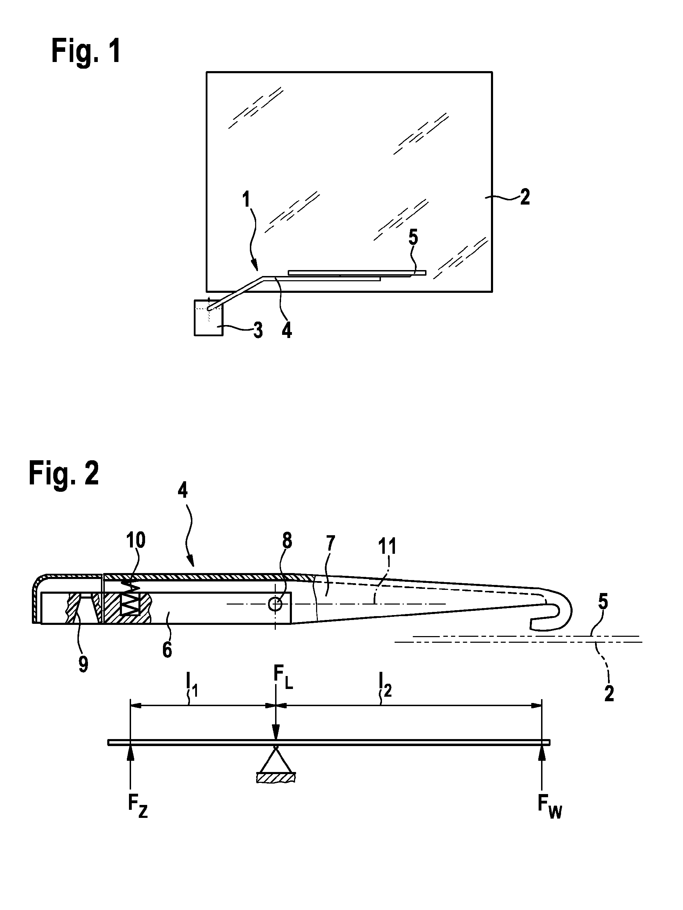

Die in Fig. 1 dargestellte Scheibenwischvorrichtung 1 wird vorzugsweise in Kraftfahrzeugen eingesetzt und dient zum Wischen einer Fahrzeugscheibe 2, beispielsweise eine Frontscheibe oder einer Heckscheibe. Die Scheibenwischvorrichtung 1 umfasst einen Wischerarm 4, der von einer Antriebsvorrichtung 3 mit elektrischem Antriebsmotor angetrieben wird und eine pendelnde Drehbewegung ausführt. An dem der Antriebsvorrichtung 3 abgewandten Ende trägt der Wischerarm 4 ein Wischblatt 5, welches auf der Scheibe 2 aufliegt und diese im Betrieb der Scheibenwischvorrichtung 1 reinigt.

Wie der detaillierten Darstellung des Scheibenwischerarms 4 aus Fig. 2 zu entnehmen, ist der Wischerarm zweiteilig ausgebildet und setzt sich aus einem Befestigungsteil 6 und einem Tragteil 7 zusammen, wobei das Befestigungsteil 6 mit einer Wellenaufnahme 9 für eine Wischerwelle der Antriebsvorrichtung versehen ist und am freien, hakenförmigen Ende des Tragteils 7 das Wischblatt 5 befestigt wird, welches auf der Scheibe 2 aufliegt. Das Befestigungsteil 6 und das Tragteil 7 sind über ein als Drehgelenk 8 ausgeführtes Verbindungselement drehbeweglich miteinander gekoppelt. Das Drehgelenk 8 ermöglicht genau einen rotatorischen Freiheitsgrad zwischen Befestigungsteil 6 und Tragteil 7, die Drehachse des Drehgelenks 8 verläuft zumindest annähernd parallel zur Scheibe 2.

Die Wellenaufnahme 9 im Befestigungsteil 6, die einen Bestandteil der gelenkigen Aufnahme des Befestigungsteils an der Antriebsvorrichtung bildet, liegt auf Abstand zum Drehgelenk zwischen Befestigungsteil und Tragteil. Des Weiteren ist ein Federelement 10 zwischen Befestigungsteil 6 und Tragteil 7 vorgesehen, das vorteilhafterweise als Schraubenfeder, insbesondere als Schraubendruckfeder ausgebildet und ebenfalls auf Abstand zum Drehgelenk 8 positioniert ist. Das Federelement 10 befindet sich bezogen auf das Drehgelenk 8 auf der gegenüberliegenden Seite zur Anbindung des Wischblattes 5 am hakenförmigen Ende des Tragteils 7, und zwar benachbart zur Wellenaufnahme 9 im Befestigungsteil 6.

Das Tragteil 7 ist als längliches Bauteil ausgeführt und besitzt eine Längsachse 11, die sich zumindest annähernd parallel zur Scheibe 2 und zum Wischblatt 5 erstreckt. Die Wirklinie des Federelementes 10 liegt senkrecht zur Längsachse 11 des Tragteils 7, außerdem ist die Wirklinie des Federelementes zumindest annähernd parallel zur Auflagekraft $F_W$ des Wischblattes 5 gerichtet. Das Federelement 10 weist einen Abstand $l_1$ zum Drehgelenk 8 auf, der Abstand zwischen dem Drehgelenk 8 und der hakenförmigen Aufnahme am gegenüberliegenden Ende des Wischerarms 4 zur Halterung des Wischblatts 5 ist mit $l_2$ bezeichnet. Die Lagerkraft $F_L$ berechnet sich näherungsweise zu

$$F_L = F_Z + F_W$$

$$F_Z = F_W \frac{l_2}{l_1}$$

$$F_L = F_W (1 + \frac{l_2}{l_1})$$

in Abhängigkeit von der Auflagekraft $F_W$ des Wischblattes auf der Scheibe und dem Längenverhältnis der als Hebel fungierenden Abstände $l_1$ und $l_2$. Aus dieser Beziehung ist auch zu erkennen, dass das Hebelverhältnis zwischen den Abständen $l_1$ und $l_2$ die Höhe der Auflagekraft $F_W$ in Abhängigkeit der Federkraft $F_Z$ bestimmt. Hierbei gilt, dass die Auflagekraft $F_W$ umso höher ist, je größer der Abstand $l_1$ im Vergleich zum Abstand $l_2$ ist. Vorteilhafterweise beträgt der Abstand $l_1$ zwischen dem Federelement 10 und dem Drehgelenk 8 mindestens ein Viertel des Abstandes $l_2$ zwischen dem Drehgelenk 8 und der Aufnahme am freien, hakenförmigen Ende des Tragteils 7.

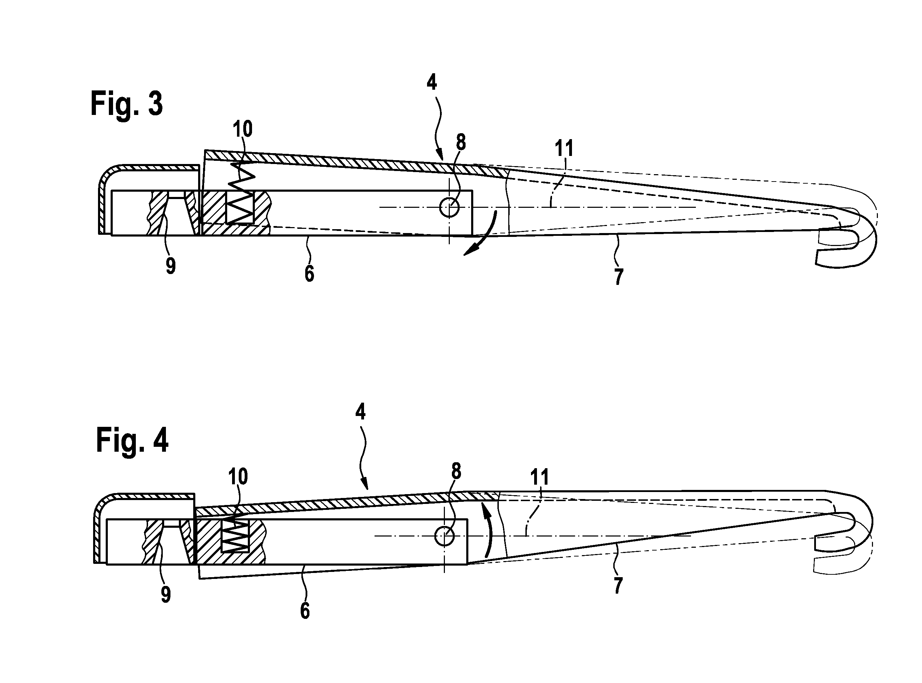

In den Figuren 3 und 4 ist der Wischerarm 4 in ausgelenkter Position dargestellt. Gemäß Fig. 3 ist das Tragteil 7 um das Drehgelenk 8 in Richtung auf die Scheibe verschwenkt, diese Verschwenkbewegung wird von dem als Schraubenfeder ausgeführten Federelement 10 unterstützt. In Fig. 4 erfolgt die Auslenkung in Gegenrichtung, also von der Scheibe weg. Hierbei wird die Schraubenfeder 10 zusammengedrückt und ist bestrebt, das Tragteil 7 wieder in die Gegenrichtung auszulenken, also in Richtung der in Fig. 3 dargestellten Position.

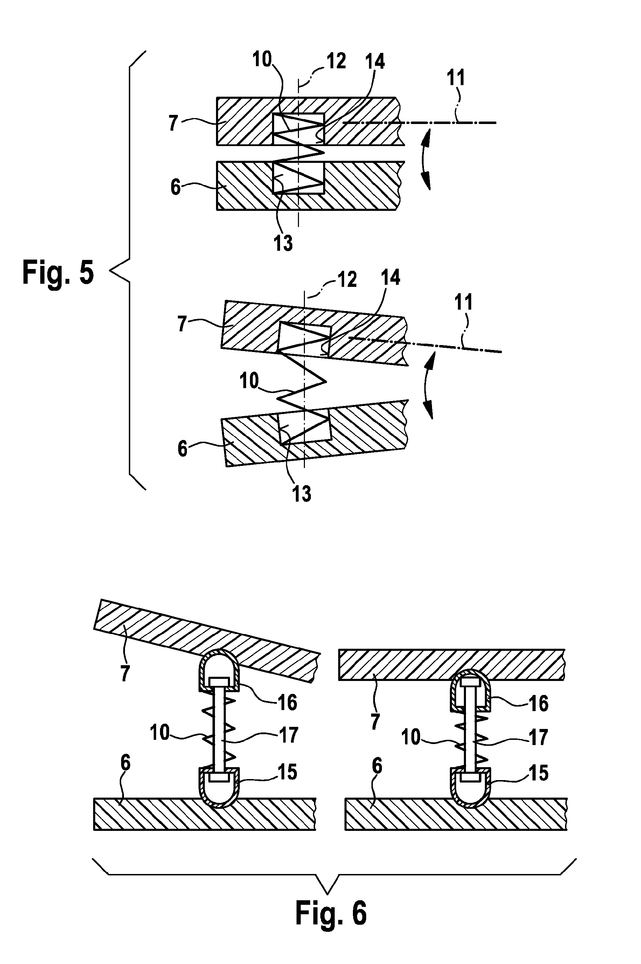

In Fig. 5 ist ein Ausschnitt aus dem Bereich des Federelementes 10 mit der Aufnahme in den Bauteilen 6 und 7 dargestellt. Sowohl an das Befestigungsteil 6 als auch an das Tragteil 7 ist jeweils eine als Sacklochbohrung ausgeführte Bohrung 13 bzw. 14 eingebracht, in die das jeweilige Ende der Schraubenfeder 10 einragt, das dort auch befestigt ist. Die Wirklinie 12 des Federelementes 10 liegt senkrecht zur Längsache 11 bzw. einer hierzu parallelen Achse des Tragteils 7. Die Aufnahme des Federelementes 10 in den Sacklochbohrungen 13 und 14 hat den Vorteil, dass auch bei einer Relativverschwenkung zwischen Befestigungsteil 6 und Tragteil 7 (unteres Bild in Fig. 5) die Wirklinie 12 des Federelementes 10 senkrecht zur Längsachse 11 bleibt. Außerdem ist das Federelement 10 sicher in den Bohrungen aufgenommen, ein versehentliches Verrutschen des Federelementes ist ausgeschossen.

In Fig. 6 ist ein weiteres Ausführungsbeispiel mit einem modifizierten Federelement 10 zwischen den Bauteilen 6 und 7 gezeigt. Das Federelement 10 umfasst eine Schraubenfeder, die zwischen Aufnahmegliedern 15 und 16 angeordnet und um einen Verbindungsstab 17 gelegt ist, der die Aufnahmeglieder 15 und 16 miteinander verbindet, jedoch axial translatorisch gegenüber zumindest einem Aufnahmeglied 15 bzw. 16 verschoben werden kann. Jedes Aufnahmeglied 15 bzw. 16 ist mit dem betreffenden Bauteil 6 bzw. 7 verbunden, wobei zumindest das dem Tragteil 7 zugeordnete Aufnahmeglied 16 relativ zum Tragteil 7 eine Schwenkbewegung ausführen kann, wo dass auch bei ausgelenktem Tragteil 7 die relative Winkellage sämtlicher Bauteile des Federelementes 10 zueinander erhalten bleibt.

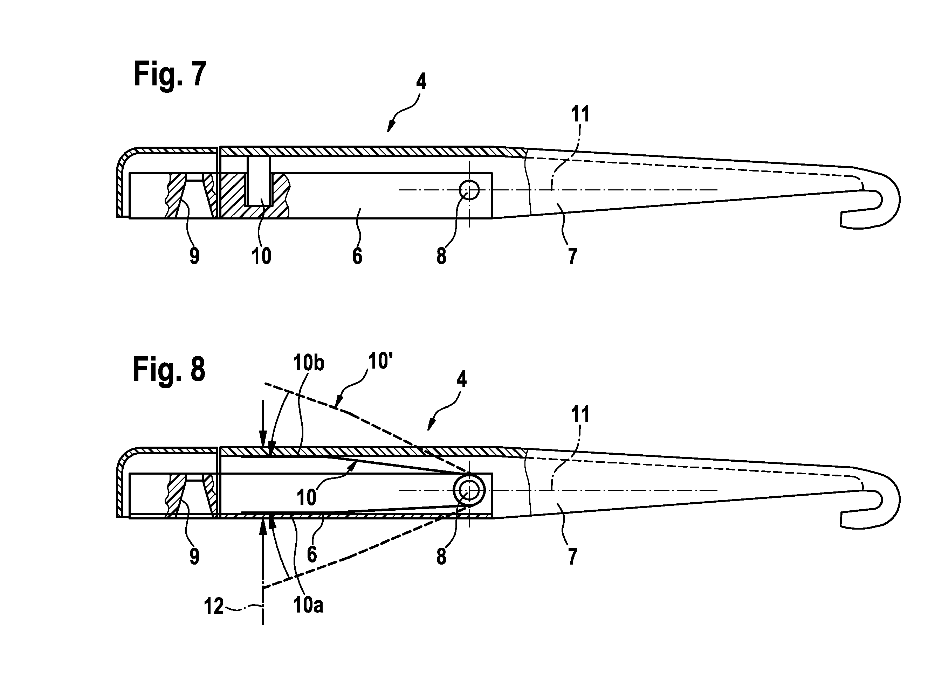

Im Ausführungsbeispiel gemäß Fig. 7 ist das Federelement 10 als Polymerfeder ausgebildet, welche ebenso wie eine Schraubenfeder eine in translatorischer Richtung wirkende Wirklinie aufweist. Die Polymerfeder ist vorzugsweise in Bohrungen bzw. Sacklochbohrungen aufgenommen, die in einander zugewandten Seiten in das Befestigungsteil 6 bzw. das Tragteil 7 eingebracht sind.

Im Ausführungsbeispiel gemäß Fig. 8 ist das Federelement 10 als Schenkelfeder ausgeführt, das einmal im Ausgangszustand - dargestellt mit Bezugszeichen 10' - und einmal in der eingebauten Position - dargestellt mit Bezugszeichen 10 - gezeigt ist. Im eingebauten Zustand erzeugen die Schenkel 10a, 10b des Federelementes 10 eine Wirklinie 12, welche senkrecht zur Längsachse 11 des Tragteils 7 gerichtet ist. Die Schenkelfeder 10 ist um die Achse des Drehgelenks 8 gelegt.

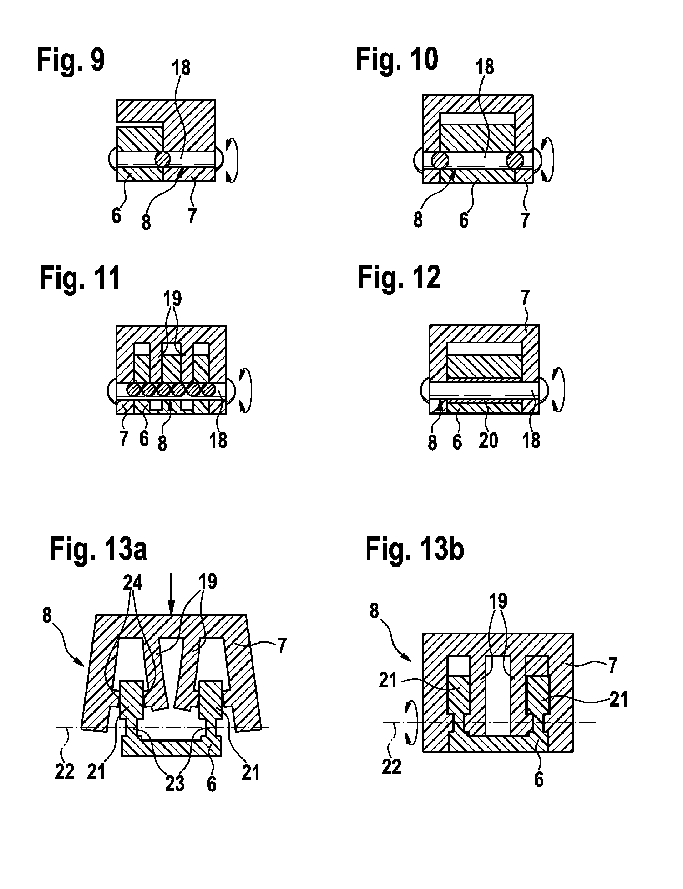

In den Figuren 9 bis 12 sind verschiedene Ausführungsvarianten für das Drehgelenk 8 zwischen Befestigungsteil 8 und Tragteil 7 dargestellt. Die Darstellungen entsprechen einem Schnitt durch den Wischerarm im Bereich des Drehgelenkes. In allen Ausführungsvarianten gemäß den Figuren 9 bis 12 erfolgt die Drehverbindung zwischen den Bauteilen 6 und 7 mithilfe eines Stiftes 18, der durch korrespondierende, miteinander fluchtende Ausnehmungen im Befestigungsteil 6 und im Tragteil 7 geführt wird und dort gesichert ist. Gemäß Fig. 9 übergreift ein Abschnitt des Tragteils 7 das Befestigungsteil 6 in Querrichtung. In Fig. 10 ist das Tragteil 7 im Querschnitt U-förmig ausgebildet und übergreift das Befestigungsteil 6. In Fig. 11 ist das Tragteil 7 ebenfalls im Querschnitt U-förmig ausgebildet, weist jedoch innerhalb der U-Form noch einstückig angeformte Gelenkbalken 19 auf, die in korrespondierende Ausnehmungen einragen, welche in das Befestigungsteil 6 eingebracht sind. Das Ausführungsbeispiel gemäß Fig. 12 entspricht im Grunde demjenigen nach Fig. 10, jedoch ist der Stift 18 in einer Buchse 20 geführt, die in die Bohrung im Befestigungsteil 6 eingesetzt ist.

In den Figuren 13a und 13b ist ein weiteres Ausführungsbeispiel eines Drehgelenks 8 zwischen den Bauteilen 6 und 7 dargestellt. Das Drehgelenk 8 benötigt keinen Stift oder eine sonstige Wellenachse für die Realisierung der Verdrehmöglichkeit zwischen den Bauteilen 6 und 7. Vielmehr ist die Verdrehmöglichkeit um die Verdrehachse 22 des Drehgelenks 8 dadurch realisiert, dass Pins 21, welche einteilig mit dem Befestigungsteil 6 ausgebildet sind, in Zwischenräume zwischen den Seitenwänden des Bauteils 7 und in die U-Form einragende Gelenkbalken 19 einragen und dort in der Montageposition gemäß Fig. 13b formschlüssig gesichert sind. Hierzu weisen die einragenden Pins 21 einen verjüngten Abschnitt 23 auf, der von Vorsprüngen 24 an den Seitenwänden des Bauteils 7 bzw. an den Gelenkbalken 19 hintergriffen wird.

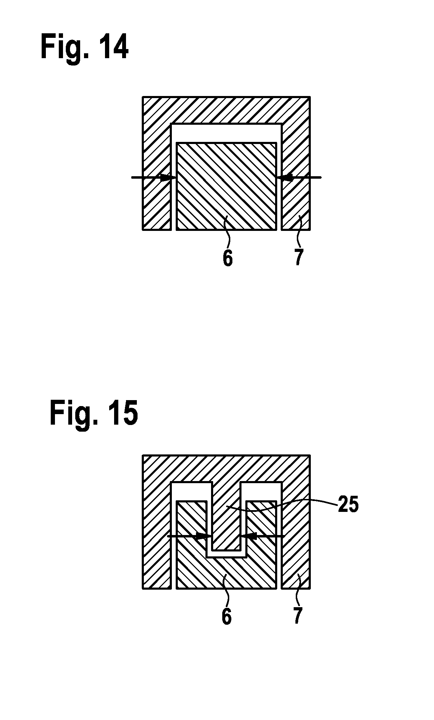

Im Ausführungsbeispiel gemäß Fig. 14 handelt es sich um eine einfache Variante von Befestigungsteil 6 und Tragteil 7, wobei der Schnitt gemäß Fig. 14 außerhalb des Drehgelenks geführt ist. Das Tragteil 7 besitzt im Querschnitt U-Form und übergreift das im Querschnitt rechteckförmige Befestigungsteil 6.

Im Ausführungsbeispiel gemäß Fig. 15 ist ebenfalls ein Schnitt durch den Wischerarm 4 außerhalb des verbindenden Drehgelenks gezeigt. Das Befestigungsteil 6 besitzt U-Form, es ist jedoch kleiner dimensioniert als das ebenfalls U-Form aufweisende Tragteil 7, das das Befestigungsteil 6 übergreift. Zusätzlich ist im Tragteil 7 ein in die U-Form einragender Mittelbalken 25 einteilig ausgebildet, der in die U-Form des Befestigungsteils 6 einragt.

**Patentansprüche**

1. Scheibenwischerarm, insbesondere für ein Kraftfahrzeug, mit einem mit einer Wischerwelle zu verbindenden Befestigungsteil (6) und mit einem Tragteil (7), welches Träger eines Wischblatts (5) ist, wobei das Tragteil (7) über ein Verbindungselement (8) mit dem Befestigungsteil (6) beweglich gekoppelt ist, und mit einem zwischen Befestigungsteil (6) und Tragteil (7) wirkenden, das Tragteil (7) in Richtung der Scheibe (2) beaufschlagenden Federelement (10), **dadurch gekennzeichnet, dass** die Wirklinie (12) des zwischen Befestigungsteil (6) und Tragteil (7) angeordneten Federelements (10) im Wesentlichen parallel zur Auflagekraft ($F_W$) des Wischblatts (5) auf die Scheibe (2) gerichtet ist.

**2.** Scheibenwischerarm nach Anspruch 1, **dadurch gekennzeichnet, dass** das Tragteil (7) länglich ausgebildet ist und die Wirklinie (12) des Federelements (10) im Wesentlichen senkrecht zur Längserstreckung des Tragteils (7) gerichtet ist.

**3.** Scheibenwischerarm nach Anspruch 1 oder 2, **dadurch gekennzeichnet, dass** das Verbindungselement (8) zwischen Befestigungsteil (6) und Tragteil (7) als Drehgelenk (8) ausgeführt ist.

**4.** Scheibenwischerarm nach Anspruch 3, **dadurch gekennzeichnet, dass** das Drehgelenk (8) als zapfenloses Gelenk mit ineinandergreifenden, einteilig ausgebildeten Gelenkteilen am Befestigungsteil (6) und am Tragteil (7) ausgebildet ist.

**5.** Scheibenwischerarm nach einem der Ansprüche 1 bis 4, **dadurch gekennzeichnet, dass** das Federelement (7) im Abschnitt zwischen der Anbindung des Befestigungsteils (6) an die Wischerwelle und dem Verbindungselement zwischen Befestigungsteil (6) und Tragteil (7) positioniert ist.

**6.** Scheibenwischerarm nach einem der Ansprüche 1 bis 4, **dadurch gekennzeichnet, dass** das Federelement (10) als Schraubenfeder, insbesondere als Schraubendruckfeder ausgebildet ist.

**7.** Scheibenwischerarm nach Anspruch 6, **dadurch gekennzeichnet, dass** die Schraubenfeder zumindest einenends in eine Bohrung (13, 14) im Befestigungsteil (6) bzw. im Tragteil (7) eingesetzt ist.

**8.** Scheibenwischerarm nach einem der Ansprüche 1 bis 4, **dadurch gekennzeichnet, dass** das Federelement (10) als Spiraloder Schenkelfeder ausgebildet ist.

**9.** Scheibenwischerarm nach einem der Ansprüche 1 bis 8, **dadurch gekennzeichnet, dass** der Abstand der Federwirklinie (12) vom Verbindungselement (8) mindestens ein Viertel des Abstandes von dem Verbindungselement (8) zur Anbindung des Wischblatts (5) beträgt.

**10.** Scheibenwischerarm nach einem der Ansprüche 1 bis 9, **dadurch gekennzeichnet, dass** das Federelement (10) vorgespannt ist.

**11.** Scheibenwischerarm nach einem der Ansprüche 1 bis 10, **dadurch gekennzeichnet, dass** das Befestigungsteil (6) und/oder das Tragteil (7) als Kunststoffteile ausgeführt sind, insbesondere als Druckguss-Kunststoffteile.

**12.** Scheibenwischerarm nach einem der Ansprüche 1 bis 10, **dadurch gekennzeichnet, dass** das Befestigungsteil (6) und/oder das Tragteil (7) als Blechteile ausgeführt sind.

**13.** Scheibenwischerarm nach einem der Ansprüche 1 bis 12, **dadurch gekennzeichnet, dass** das Federelement (10) als Polymerfeder ausgebildet ist.

# Fig. 1

# Fig. 2

Fig. 3

Fig. 4

**Fig. 5**

**Fig. 6**

Fig. 7

Fig. 8

**Fig. 9**

**Fig. 10**

**Fig. 11**

**Fig. 12**

**Fig. 13a**

**Fig. 13b**

**Fig. 14**

6    7

**Fig. 15**

25

6    7

**Europäisches Patentamt**
**European Patent Office**
**Office européen des brevets**

# EUROPÄISCHER RECHERCHENBERICHT

Nummer der Anmeldung

EP 08 10 5566

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 1 985 071 A (BENNETT BAGGS CHARLES) 18. Dezember 1934 (1934-12-18) * das ganze Dokument * | 1-10,12 | INV. B60S1/34 |
| Y | | 13 | |
| X | FR 2 771 062 A (VALEO SYSTEMES ESSUYAGE [FR]) 21. Mai 1999 (1999-05-21) * das ganze Dokument * | 1-12 | |
| X | DE 35 08 542 A1 (SWF AUTO ELECTRIC GMBH [DE]) 11. September 1986 (1986-09-11) * Seite 10, Absatz 2; Abbildung 5 * | 1-4, 6-10,12 | |
| X | US 2 202 311 A (FOLBERTH FREDERICK G ET AL) 28. Mai 1940 (1940-05-28) * das ganze Dokument * | 1-4,12 | |
| Y | DE 100 48 227 A1 (BROSE FAHRZEUGTEILE [DE]) 18. April 2002 (2002-04-18) * Absatz [0026] * | 13 | |

RECHERCHIERTE SACHGEBIETE (IPC)

B60S

Der vorliegende Recherchenbericht wurde für alle Patentansprüche erstellt

| Recherchenort | Abschlußdatum der Recherche | Prüfer |
|---|---|---|
| München | 23. Dezember 2008 | Jazbec, Simon |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 10 5566

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-12-2008

| Im Recherchenbericht angeführtes Patentdokument | Datum der Veröffentlichung | Mitglied(er) der Patentfamilie | Datum der Veröffentlichung |
|---|---|---|---|
| US 1985071 A | 18-12-1934 | KEINE | |
| FR 2771062 A | 21-05-1999 | AU 1244599 A | 15-06-1999 |
| | | DE 69806571 D1 | 22-08-2002 |
| | | DE 69806571 T2 | 27-03-2003 |
| | | EP 0951411 A1 | 27-10-1999 |
| | | ES 2181301 T3 | 16-02-2003 |
| | | WO 9926817 A1 | 03-06-1999 |
| | | US 6282743 B1 | 04-09-2001 |
| DE 3508542 A1 | 11-09-1986 | KEINE | |
| US 2202311 A | 28-05-1940 | KEINE | |
| DE 10048227 A1 | 18-04-2002 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2289552 A